# EUROPEAN PATENT SPECIFICATION

(11) **EP 1 535 382 B1**
(45) Date of publication and mention of the grant of the patent: **10.10.2012**
(21) Application number: 03792151.7
(22) Date of filing: 21.08.2003
(51) Int. Cl.: H02H 3/12

(54) **AN OFF-MAINS DEVICE FOR ELECTRICAL APPARATUSES**
NETZ-AUS-EINRICHTUNG FÜR ELEKTRISCHE VORRICHTUNGEN
DISPOSITIF A RESEAU EXTERIEUR DESTINE A DES APPAREILS ELECTRIQUES

(30) Priority: 23.08.2002 DK 200201247
(43) Date of publication of application: 01.06.2005
(73) Proprietor: LINAK A/S, DK-6430 Nordborg (DK)
(72) Inventor: BASTHOLM, Jeppe, DK-6400 Sonderborg (DK)
(74) Representative: Pedersen, Soeren Skovgaard
(86) International application number: PCT/DK2003/000552
(87) International publication number: WO 2004/019463

(56) References cited:
- WO-A1-95/23450
- US-A- 4 795 914

## Description

The present invention relates to an off-mains device for electrical apparatuses connected to the mains, where the off-mains device comprises an auxiliary voltage source, which supplies an oscillator that cooperates with a resonance circuit. The resonance circuit is connected to a capacity capacitor which is charged by the oscillator via the resonance circuit, such that when the apparatus is activated, the current of the charged capacity capacitor is led to an optocoupler whereby a relay is short-circuited causing the apparatus to be connected to the mains. When the activation of the apparatus ceases, the connection to the mains is interrupted.

Off-mains devices are used in connection with electrically adjustable articles of furniture for automatically switching off the mains voltage to the article of furniture. When adjusting the article of furniture, the mains voltage is switched on automatically and switched off again after completed adjustment. Such off-mains devices are known inter alia from EP 0 615 667 B2 to Okin and DE 92 12 599.9 U1 to Dewert as well as EP 0 792 533 B1 to Linak. All three cases involve off-mains devices for an actuator system consisting of at least one actuator driven by a low volt motor, a main voltage supply having a transformer, a rectifier and a smoothing capacitor, an electrical control and finally a wired manual control for the activation of the electrical control.

The off-mains device according to EP 615 667 to Okin is based on an actuator system, where the operating voltage for the actuator is also the control voltage. For the activation of the relay, use is made of an auxiliary voltage supply which is coupled in parallel with the main power supply and is in the form of a capacitor coupled in parallel with the power supply. The capacitor is supported by a battery in the event that the capacitor should lose its charge. It has been found in practice that both capacitor and battery may be depleted of power, and therefore the realization of the invention moreover includes a push-button for manual activation of the relay.

DE 92 12 599 to Dewert is based on an actuator system having a control voltage which is lower than and separate from the operating voltage, and which is based on a small independent transformer connected to the mains at all times. Here, the off-mains device is activated by the control voltage. The system has the advantage that it is always ready for operation, but the drawback is a permanent E field, which is precisely what the off-mains switching is to prevent among other things. The reason is that the small transformer couples the E field via the wiring to the control and the main voltage supply.

In EP 0 792 544 A2 to Linak, the mains voltage is switched off by a set of triacs instead of a relay. In the operation of the system, the triacs are activated by an optocoupler receiving power from a high capacity capacitor, which is kept charged by briefly switching on the mains at regular intervals. This is done via separate control electronics based on a timer. Another solution is based on a small auxiliary capacitor permanently connected to the mains via voltage limiting means, and with just sufficient capacity for activating the optocoupler a single time. These, however, are relatively expensive solutions.

The object of the invention is to find an alternative to the mentioned solutions which avoids the drawbacks of these.

The object is achieved according to the invention in that the off-mains device comprises an oscillator and a resonance circuit, where the oscillator is cooperating with the resonance circuit, the off-mains device further comprises a capacity capacitor and an optocoupler, the resonance circuit is connected to the capacity capacitor which is charged by the oscillator via the resonance circuit, such that when the apparatus is activated the current of the charged capacity capacitor is led to an optocoupler whereby the relay is short-circuited causing the apparatus to be connected to the mains. Elative to EP 615 667, the structure is advantageous in that it is always operative without the use of a battery and without any need for manual operation. Relative to DE 92 12 599, the structure may be configured so as to be free of E fields and without any need for tests for compliance with insulation requirements, which is necessary when the structure contains a transformer. Relative to Linak, the structure is considerably simpler, and the same also applies relative to the two Okin and Dewert structures.

The oscillator can comprise a transistor, a coil, three capacitors and two resistors. Here two of the capacitors can be coupled in parallel with the coil. The oscillator is particularly simple and can be manufactured at low costs. This also applies to an embodiment of the resonance circuit comprising a coil and a capacitor coupled in parallel.

In an embodiment of the off-mains device, the coil of the oscillator and the coil of the resonance circuit are physically separated by a spacing of at least 8 millimetres. Hereby the insulation requirements specified by the power current regulations can be met.

The auxiliary voltage supply of the off-mains device can comprise a capacity capacitor and a bridge rectifier as well as a smoothing capacitor.

The relay of the off-mains device can be embodied such that the relay is drawn to switch off the mains voltage to the electrical apparatus. It can also be set such that the relay is in an off-position to switch off the mains voltage to the electrical apparatus.

The invention will be explained more fully below with reference to the example of an embodiment shown in the accompanying drawing. In the drawing:
- Fig. 1: shows an embodiment of the off-mains switch,
- fig. 2: shows a diagram of a modified embodiment thereof, and
- fig. 3: shows a diagram showing the electrical equipment for a bed having electrically adjustable back and leg sections.

The off-mains device comprises an auxiliary voltage supply based on a capacitor C8 and a full-wave rectifier D2 as well as a smoothing capacitor C6. The auxiliary voltage supply is connected to the mains J1, J2 and keeps a switch relay K1 in the mains connection J3, J4 to an electrical apparatus drawn for interrupting the mains connection thereto. The switch relay comprises a relay coil K1-C, connected to the two relay contacts K1-A and K1-B.

In addition, the off-mains device comprises an oscillator connected to the auxiliary voltage supply. The oscillator is a simple oscillator based on a transistor Q2. The oscillator also comprises a coil L1 and a capacitor C4 and C7 coupled in parallel with the coil L1. The oscillator further comprises a capacitor C3 and two resistors R2, R3. A resonance circuit is arranged in cooperation with the oscillator, likewise consisting of a coil L2 and a capacitor C5 coupled in parallel. The two coils L1 and L2 are physically separated by a spacing of 8 mm or more, thereby meeting the insulation requirement specified by the power current regulations.

The energy dissipated in the resonance circuit L2, C5 because of the oscillation is fed to a capacity capacitor C1. Because of the connection of the oscillator to the mains J1, J2, the charge of the capacity capacitor C1 will be idle, when the apparatus is no longer operated.

The relay K1-A, K1-B, K1-C is controlled by a transistor Q1 in connection with the relay coil K1-C of the relay. The base of the transistor Q1 is connected to the capacity capacitor C1 via an optocoupler U1 in addition to the control of the electrical apparatus. When the electrical apparatus is activated, the current from the capacity capacitor C1 to the optocoupler U1 is switched on, which thereby activates the transistor Q1. This short-circuits the relay coil K1-C, and the set of contacts K1-A, K1-B drops back to the position of rest and thereby connects the electrical apparatus to the mains J1, J2.

When the activation of the electrical apparatus ceases, the current from the capacitor C1 to the optocoupler U1 is interrupted, whereby the transistor Q1 discontinues the short-circuit of the relay coil K1-C, which in turn activates the relay, and the mains connection to the electrical apparatus is switched off again.

It is noted that although the oscillator is stopped as long as the electrical apparatus operates, it automatically starts again when the operation ceases. During the operation of the apparatus, the optocoupler is connected to its control voltage.

Basically, the off-mains device is incorporated in a plug intended for being plugged into an outlet and connected by a cable to the electrical apparatus. If desired, the off-mains device may instead be incorporated in connection with the electrical apparatus or in a separate power supply or at a suitable location in the mains connection.

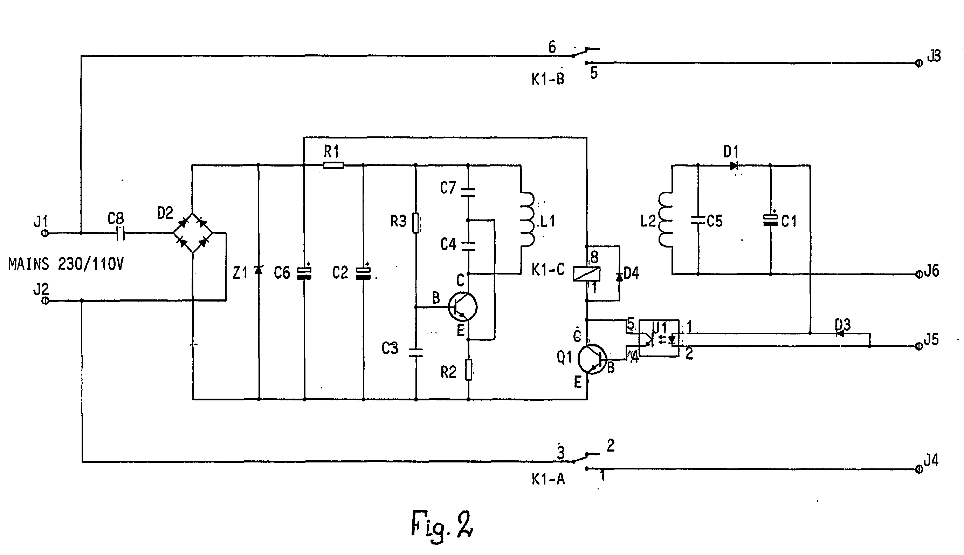

Fig. 2 of the drawing shows a modified embodiment of the invention, where the relay K1-A, K1-B, K1-C in the off-position switches off the mains connection to the electrical apparatus and switches on the mains connection to the apparatus in the on-state.

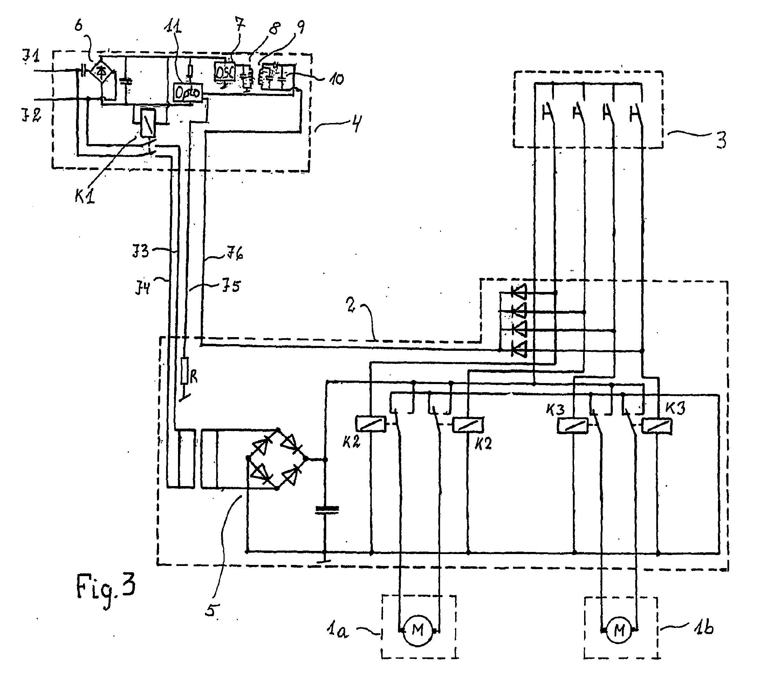

The electrical apparatus may be the electrical equipment for a bed having adjustable back and leg sections as illustrated in overall view in fig. 3. The back and leg sections are adjusted by their separate DC motor-driven actuators 1 a, 1b connected to a control box 2 containing a main voltage supply 5 based on a transformer, a rectifier as well as a smoothing capacitor. The control box 2 additionally contains a control for the two actuators based on two sets of relays K2, K3. Depending on the circumstances, the main voltage supply 5 may be a separate unit, just as the control may be integrated in the actuators. The actuators 1 a, 1b are activated via the control by a manual control 3 with two sets of contacts for raising and lowering the back/leg sections, respectively.

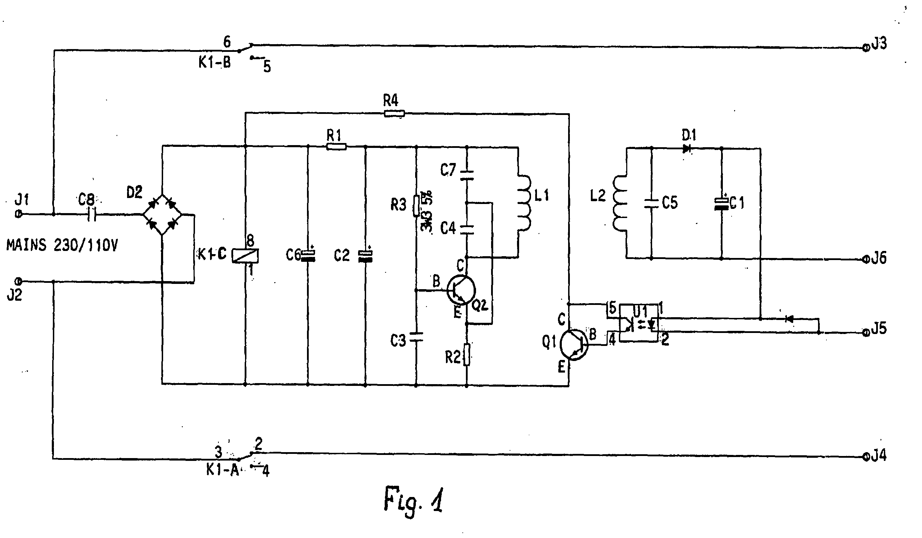

As will appear, the control box 2 is connected to the mains J1, J2 via an off-mains device 4 which switches off the mains J1, J2 connection to the primary side of the transformer of the control box 2 via the relay K1. The off-mains device 4 contains a small voltage supply 6 in connection with an oscillator 7, which keeps a capacity capacitor 10 charged through an oscillation circuit 8 via a resonance circuit 9 cooperating therewith. The off-mains device 4 is connected via an optocoupler 11 to the manual control 3. Activation of a key on the manual control for the start of an actuator causes the relay K1 to be activated and the mains J1, J2 to be connected to the primary side of the transformer of the main power supply. When the power to the actuator is switched off by releasing the key on the manual control, the relay K1 again switches off the mains connection to the main power supply. It should be noted that in figure 3 the oscillation circuit 8 is illustrated separated from the oscillator 7. This is solely to illustrate that the two coils, corresponding to L1 and L2 in figure 1, are physically separated, whereby the insulation requirements specified by the power current regulations are met. The oscillator 7 and oscillation circuit 8 in figure 3 therefore constitute the oscillator as a whole. Hence, it will be appreciated that oscillator and optocoupler may be embodied as shown in figs. 1 and 2, but the invention is not restricted to this. A person skilled in the art may choose among the available oscillators and connections on the basis of the concrete use and specifications.

## Claims

1. An off-mains device for electrical apparatuses connected to the mains (J1,J2), the off-mains device comprising a relay (K1) connected to the mains (J1, J2) as well as an auxiliary voltage source for powering the relay (K1) such that the relay (K1) connects the mains (J1,J2) to the apparatus when the apparatus is activated and interrupts the connection to the mains (J1,J2) when the activation of the apparatus ceases, **characterized in that** the off-mains device comprises an oscillator (Q2, L1, C3, R2, R3, C4, C7) and a resonance circuit (L2, C5), where the oscillator (Q2, L1, C3, R2, R3, C4, C7) is cooperating with the resonance circuit (L2, C5), the off-mains device further comprises a capacity capacitor (C1) and an optocoupler (U1), the resonance circuit (L2, C5) is connected to the capacity capacitor (C1) which is charged by the oscillator (Q2, L1, C3, R2, R3, C4, C7) via the resonance circuit (L2, C5), such that when the apparatus is activated the current of the charged capacity capacitor (C1) is led to an optocoupler (U1) whereby the relay (K1) is short-circuited causing the apparatus to be connected to the mains (J1, J2).

2. An off-mains device according to claim 1, **characterized in that** the oscillator comprises a transistor (Q2), a coil (L1), three capacitors (C3, C4, C7) and two resistors (R2, R3).

3. An off-mains device according to claim 2, **characterized in that** two of the capacitors (C4,C7) are coupled in parallel with the coil (L1).

4. An off-mains device according to claims 1-3, **characterized in that** the resonance circuit comprises a coil (L2) and a capacitor (C5) coupled in parallel.

5. An off-mains device according to claims 1-4, **characterized in that** the coil (L1) of the oscillator (Q2, L1, C3, R2, R3, C4, C7) and the coil (L2) of the resonance circuit (L2, C5) are physically separated by a spacing of at least 8 millimetres.

6. An off-mains device according to claims 1-5, **characterized in that** the auxiliary voltage supply comprises a capacitor (C8) and a bridge rectifier (D2) as well as a smoothing capacitor (C6).

7. An off-mains device according to claim 1, **characterized in that** the relay (K1) is drawn to switch off the mains (J1, J2) voltage to the electrical apparatus.

8. An off-mains device according to claim 1, **characterized in that** the relay (K1) is in an off-position to switch off the mains voltage (J1, J2) to the electrical apparatus.

## Patentansprüche

1. Eine Netzanschluss-Einrichtung für elektrische Vorrichtungen, die mit dem Netz (J1, J2) verbunden sind, wobei die Netzanschluss-Einrichtung ein mit dem Netz (J1, J2) verbundenes Relais (K1) sowie eine Hilfsspannungsquelle zur Versorgung des Relais (K1) mit Energie (Strom) derart umfasst, dass das Relais (K1) das Netz (J1, J2) mit der Vorrichtung in Verbindung schaltet, wenn die Vorrichtung in Betrieb gesetzt wird, und die Verbindung mit dem Netz (J1, J2) unterbricht, wenn der Betrieb der Vorrichtung endet, **dadurch gekennzeichnet, dass** die Netzanschluss-Einrichtung einen Oszillator oder Wechselrichter (Q2, L1, C3, R2, R3, C4, C7) und einen Resonanz- oder Schwingkreis (L2, C5) umfasst, wobei der Oszillator (Q2, L1, C3, R2, R3, C4, C7) mit dem Resonanz- oder Schwingkreis (L2, C5) zusammenwirkt, die Netzanschluss-Einrichtung weiter einen Leistungskondensator (C1) und ein opto-elektronisches Koppelelement (U1) umfasst, der Resonanz- oder Schwingkreis (L2, C5) mit dem Leistungskondensator (C1) verbunden ist, der von dem Oszillator bzw. Wechselrichter (Q2, L1, C3, R2, R3, C4, C7) über den Resonanz- oder Schwingkreis (L2, C5) geladen wird derart, dass, wenn die Vorrichtung in Betrieb gesetzt wird, der Strom des geladenen Leistungskondensators (C1) einem opto-elektronischen Koppelelement (U1) zugeleitet wird, wodurch das Relais (K1) kurzgeschlossen wird, was dazu führt, dass die Vorrichtung mit dem Netz (J1, J2) verbunden wird.

2. Eine Netzanschluss-Einrichtung nach Anspruch 1, **dadurch gekennzeichnet, dass** der Oszillator bzw. Wechselrichter einen Transistor (Q2), eine Spule (L1), drei Kondensatoren (C3, C4, C7) und zwei Widerstände (R2, R3) umfasst.

3. Eine Netzanschluss-Einrichtung nach Anspruch 2, **dadurch gekennzeichnet, dass** zwei der Kondensatoren (C3, C4) parallel mit der Spule (L1) geschaltet sind.

4. Eine Netzanschluss-Einrichtung nach den Ansprüchen 1 bis 3, **dadurch gekennzeichnet, dass** der Resonanz- oder Schwingkreis eine Spule (L2) und einen Kondensator (C5), die parallel geschaltet sind, umfasst.

5. Eine Netzanschluss-Einrichtung nach den Ansprüchen 1 bis 4, **dadurch gekennzeichnet, dass** die Spule (L1) des Oszillators bzw. Wechselrichters (Q2, L1, C3, R2, R3, C4, C7) und die Spule (L2) des Resonanz- oder Schwingkreises (L2, C5) räumlich durch einen Abstand von mindestens 8 Millimetern getrennt sind.

6. Eine Netzanschluss-Einrichtung nach den Ansprüchen 1 bis 5, **dadurch gekennzeichnet, dass** die Hilfsspannungsversorgung einen Kondensator (C8) und einen Brücken-Gleichrichter (D2) sowie einen Glättungskondensator (C6) umfasst.

7. Eine Netzanschluss-Einrichtung nach Anspruch 1, **dadurch gekennzeichnet, dass** das Relais (K1) ausgelöst wird, um die vom Netz (J1, J2) an der elektrischen Vorrichtung anliegende Spannung abzuschalten.

8. Eine Netzanschluss-Einrichtung nach Anspruch 1, **dadurch gekennzeichnet, dass** sich das Relais (K1) in einer Aus-Position befindet, um die Spannung des Netzes (J1, J2), die an der elektrischen Vorrichtung anliegt, abzuschalten.

## Revendications

1. Dispositif hors secteur pour appareils électriques connectés au secteur (J1, J2), le dispositif hors secteur comprenant un relais (K1) connecté au secteur (J1, J2) ainsi qu'une source de tension auxiliaire pour alimenter le relais (K1) de sorte que le relais (K1) connecte le secteur (J1, J2) à l'appareil lorsque l'appareil est activé et interrompe la connexion avec le secteur (J1, J2) lorsque l'activation de l'appareil cesse, **caractérisé en ce que** le dispositif hors secteur comprend un oscillateur (Q2, L1, C3, R2, R3, C4, C7) et un circuit de résonance (L2, C5), où l'oscillateur (Q2, L1, C3, R2, R3, C4, C7) coopère avec le circuit de résonance (L2, C5), le dispositif hors secteur comprend en outre un condensateur (C1) et un optocoupleur (U1), le circuit de résonance (L2, C5) est connecté au condensateur (C1) qui est chargé par l'oscillateur (Q2, L1, C3, R2, R3, C4, C7) via le circuit de résonance (L2, C5) de sorte que, lorsque l'appareil est activé, le courant du condensateur chargé (C1) soit acheminé à un orthocoupleur (U1) si bien que le relais (K1) est court-circuité, ce qui amène l'appareil à se connecter au secteur (J1, J2).

2. Dispositif hors secteur selon la revendication 1, **caractérisé en ce que** l'oscillateur comprend un transistor (Q2), une bobine (L1), trois condensateurs (C3, C4, C7) et deux résistances (R2, R3).

3. Dispositif hors secteur selon la revendication 2, **caractérisé en ce que** deux des condensateurs (C4, C7) sont couplés en parallèle avec la bobine (L1).

4. Dispositif hors secteur selon les revendications 1 à 3, **caractérisé en ce que** le circuit de résonance comprend une bobine (L2) et un condensateur (C5) couplés en parallèle.

5. Dispositif hors secteur selon les revendications 1 à 4, **caractérisé en ce que** la bobine (L1) de l'oscillateur (Q2, L1, C3, R2, R3, C4, C7) et la bobine (L2) du circuit de résonance (L2, C5) sont physiquement séparées par un espacement d'au moins huit millimètres.

6. Dispositif hors secteur selon les revendications 1 à 5, **caractérisé en ce que** l'alimentation en tension auxiliaire comprend un condensateur (C8) et un redresseur à pont (D2) ainsi qu'un condensateur de lissage (C6).

7. Dispositif hors secteur selon la revendication 1, **caractérisé en ce que** le relais (K1) est intercalé pour déconnecter la tension du secteur (J1, J2) de l'appareil électrique.

8. Dispositif hors secteur selon la revendication 1, **caractérisé en ce que** le relais (K1) est en position d'arrêt pour déconnecter la tension du secteur (J1, J2) de l'appareil électrique.
